# EUROPEAN PATENT APPLICATION

(11) **EP 2 899 948 A1**
(43) Date of publication of application: **29.07.2015**
(21) Application number: 15152406.3
(22) Date of filing: 23.01.2015
(51) Int. Cl.: H04L 29/08, G06F 11/14

(54) **Method for managing data and electronic device thereof**

(30) Priority: 24.01.2014 KR 20140009148
(71) Applicant: Samsung Electronics Co., Ltd, Gyeonggi-do 443-742 (KR)
(72) Inventor: Yang, Hyun-Young, Seoul (KR); Ahn, Hyung-Ki, Seoul (KR); Yoon, Han-Kil, Gyeonggi-do (KR); Lee, Sang-Hyun, Gyeonggi-do (KR); Lee, Yong-Whi, Seoul (KR); Lee, Ji-Won, Gyeonggi-do (KR); Jeong, Hak-Hyeon, Seoul (KR); Chae, Soo-Hwan, Seoul (KR)
(74) Representative: HGF Limited

(57) **Abstract**

An apparatus and a method for storing and restoring data in an electronic device (100) are provided. In a method for restoring data, an event page including at least one data is generated. Information for the event page is transmitted to a server (110). When occurrence of a display event is detected, a request signal for at least one event page corresponding to the display event is transmitted to the server (110). An event page provided from the server (110) is displayed.

## Description

### TECHNICAL FIELD

The present disclosure relates to an apparatus and a method for storing and restoring data in an electronic device. More particularly, the present disclsoure relates to an apparatus and a method for utilizing data stored in a server in an electronic device.

### BACKGROUND

With development of information and telecommunication technology and a semiconductor technology, various types of electronic devices may provide various multimedia services. For example, an electronic device provides various services, such as a messenger service, a broadcast service, a wireless Internet service, a camera service, a music reproduction service, and the like.

With development of an information and telecommunication technology, an electronic device may transmit data to a server connected via a wired line or wirelessly to backup the relevant data.

Data stored as backup in a server is restored or downloaded to an electronic device when the electronic device is destroyed or a user selects. Utility of data stored as backup in the server is low.

Therefore, a need exists for an apparatus and a method for utilizing data stored in a server in an electronic device.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an apparatus and a method for utilizing data stored in a server in an electronic device.

Another aspect of the present disclosure is to provide an apparatus and a method for storing an event page including at least one user data using a server in an electronic device.

Still another aspect of the present disclosure is to provide an apparatus and a method for automatically restoring an event page stored in a server in an electronic device.

In accordance with an aspect of the present disclosure, a method for restoring data in an electronic device is provided. The method includes generating an event page including data, transmitting information for the event page to the server, when detecting occurrence of a display event, transmitting a request signal for at least one event page corresponding to the display event to the server, and displaying an event page provided from the server.

In accordance with another aspect of the present disclosure, an electronic device is provided. The electronic device includes a communication interface, a display, and a processor configured to generate an event page including data, to transmit information for the event page to a server based on the communication interface, when detecting occurrence of a display event, to transmit a request signal for at least one event page corresponding to the display event to the server based on the communication interface, and to display an event page provided from the server on the display.

Other aspects, advantages and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a configuration of a wireless communication system according to an embodiment of the present disclosure;
FIG. 2 is a block diagram illustrating an electronic device according to an embodiment of the present disclosure;
FIG. 3 is a block diagram illustrating a processor according to an embodiment of the present disclosure;
FIG. 4 is a block diagram illustrating a server according to an embodiment of the present disclosure;
FIG. 5 is a flowchart illustrating a procedure for transmitting an event page in an electronic device according to an embodiment of the present disclosure;
FIG. 6 is a flowchart illustrating a procedure for generating an event page in an electronic device according to an embodiment of the present disclosure;
FIG. 7 is a flowchart illustrating a procedure for generating an event page in an electronic device according to an embodiment of the present disclosure;
FIGS. 8A and 8B illustrate configurations of an event page according to an embodiment of the present disclosure;
FIG. 9 is a flowchart illustrating a procedure for storing an event page in a server according to an embodiment of the present disclosure;
FIG. 10 is a flowchart illustrating a procedure for displaying an event page in an electronic device according to an embodiment of the present disclosure;
FIG. 11 is a flowchart illustrating a procedure for receiving an event page from a server in an electronic device according to an embodiment of the present disclosure;
FIG. 12 is a flowchart illustrating a procedure for transmitting an event page to an electronic device in a server according to an embodiment of the present disclosure;
FIG. 13 illustrates a configuration for transmitting an event page in a server according to an embodiment of the present disclosure;
FIG. 14 is a flowchart illustrating a procedure for receiving user data forming an event page in an electronic device according to an embodiment of the present disclosure; and
FIG. 15 is a flowchart illustrating a procedure for transmitting user data to an electronic device in a server according to an embodiment of the present disclosure.

Throughout the drawings, like reference numerals will be understood to refer to like parts, components and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Hereinafter, a technology for storing and restoring data in an electronic device is described.

An electronic device according to the present disclosure may include one or more of a smartphone providing a communication service, a tablet personal computer (PC), a mobile phone, a video phone, an e-book reader, a desktop PC, a laptop PC, a netbook computer, a Personal Digital Assistant (PDA), a Portable Multimedia Player (PMP), a Motion Pictures Expert Group (MPEG-1 or MPEG-2) Audio Layer 3 (MP3) player, an accessory, an electronic appcessory, a camera, or a wearable device, a wrist watch, a refrigerator, an air conditioner, a cleaner, an artificial intelligence robot, a TV, a Digital Video Disk (DVD) player, an audio, an oven, an electronic range, a washing machine, an electronic bracelet, an electronic necklace, an air purifier, an electronic frame, a medical device, a navigation device, a satellite signal receiver, an event data recorder (EDR), a flight data recorder (FDR), a set-top box, a TV box, an electronic dictionary, an automobile infotainment device, electronic equipment for a ship, an avionics, a security device, an electronic clothing, an electronic key, a camcorder, game consoles, a head-mounted display (HMD), a flat panel display device, an electronic album, a portion of a furniture or a building/structure including an electronic device, an electronic board, an electronic signature receiving device, and a projector. In addition, it is obvious to a person of ordinary skill in the art that an electronic device according to the present disclosure is not limited to the above-described devices.

In the description below, a server may include an external storage device for storing data provided from an electronic device via a wired line or wirelessly.

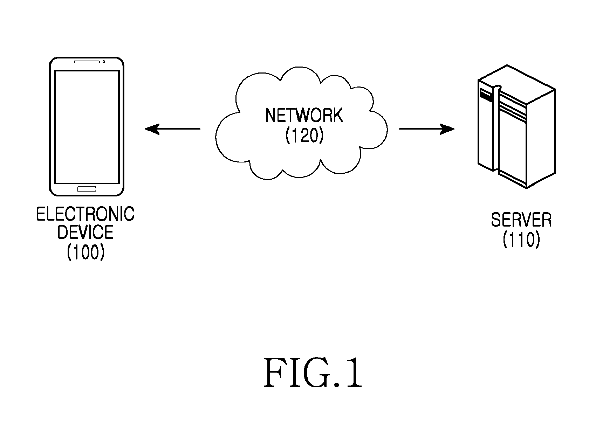

FIG. 1 illustrates a configuration of a wireless communication system according to an embodiment of the present disclosure.

Referring to FIG. 1, an electronic device 100 and a server 110 may be connected via a wired or wireless network 120.

The electronic device 100 may generate one or more event pages including one or more user data and transmit the one or more event pages to the server 110. For example, the electronic device 100 may transmit configuration information of one or more event pages and user data included in the event page to the server 110. Here, the configuration information of the event page may include one or more user data information included in an event page and arrangement information of one or more user data. The user data represents information that may be collected using an electronic device 200, such as a photo, text, a moving picture, a sound, link information, and position information, and may be called context.

The server 110 may store one or more event pages provided from the electronic device via the network 120.

In the case where a display event for an event page occurs, the electronic device 100 may transmit a request signal for an event page corresponding to a display event to the server 110.

The server 110 may retrieve an event page corresponding to a request signal provided from the electronic device 100 to provide the event page to the electronic device 100.

The electronic device 100 may display an event page provided from the server on a display so that a user may view the event page.

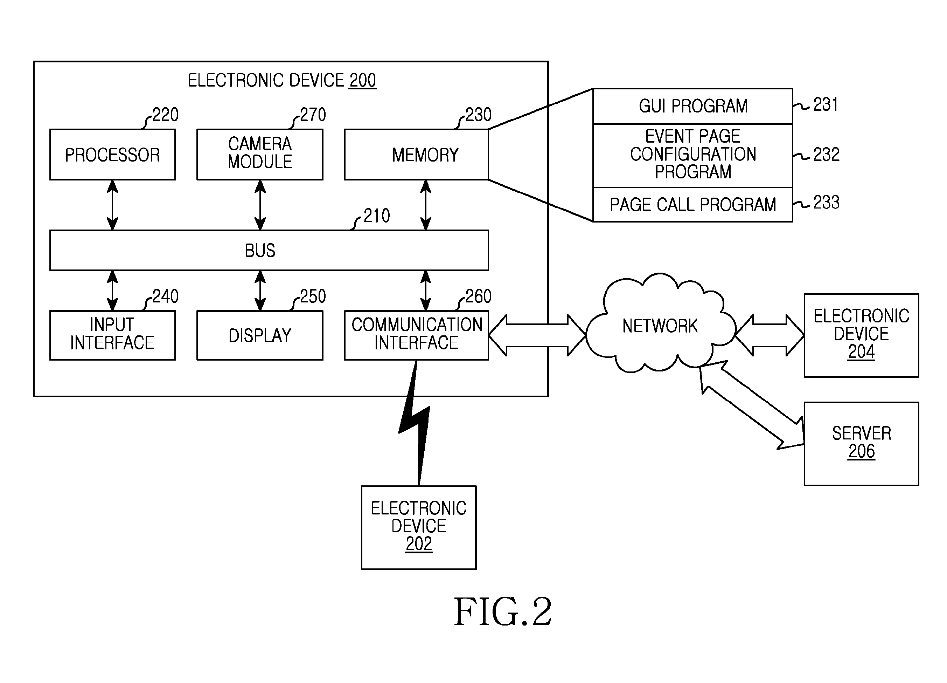

FIG. 2 is a block diagram illustrating an electronic device according to an embodiment of the present disclosure.

Referring to FIG. 2, the electronic device 200 may include a bus 210, a processor 220, a memory 230, an input interface 240, a display 250, a communication interface 260, and a camera module 270. Here, one or more of the processor 220 and the memory 230 may be provided in the plural.

The bus 210 connects elements included in the electronic device 100 and controls communication between the elements included in the electronic device 100.

The processor 220 controls the electronic device 200 to provide various services. For example, the processor 220 may decipher an instruction received from one or more other elements (e.g., the memory 230, the input interface 240, the display 250, the communication interface 260, and the camera module 270) included in the electronic device 200 via the bus 210, and execute an operation or a data process corresponding to the deciphered instruction.

The processor 220 may execute one or more programs stored in the memory 230 and control the electronic device 200 to provide various services.

The processor 220 may execute a page configuration program 232 stored in the memory 230 to generate one or more event pages including one or more user data. For example, when detecting occurrence of a generation event for an event page, the processor 220 may generate one or more event pages including one or more user data among user data collected via the camera module 270 from a point of detecting the occurrence of the generation event. For another example, when detecting occurrence of a generation event for an event page, the processor 220 may select one or more user data corresponding to a characteristic of the generation event among user data stored in the memory 130 to generate one or more event pages. For another example, when generating the event page, the processor 220 may generate a plurality of event pages including one or more event pages provided from another electronic device 202 or 204 via the communication interface 260. Here, the event page may represent screen configuration configured to include one or more user data corresponding to a specific circumstance in order to represent information for the specific circumstance.

The processor 220 may control the communication interface 260 to transmit information for one or more event pages generated by execution of an event page configuration program 232 to a server 206. For example, the processor 220 may control the communication interface 260 to transmit configuration information of one or more event pages and user data included in an event page to the server 206. Here, the configuration information of the event page may include one or more user data information included in an event page and arrangement information of one or more user data.

The processor 220 may execute a page call program 233 stored in the memory 230 to restore one or more event pages among event pages transmitted to the server 206. For example, when detecting occurrence of a display event for an event page, the processor 220 may request the server 206 to transmit one or more event pages corresponding to the display event via the communication interface 260 to restore a relevant event page. For example, the processor 220 may determine whether a display event for an event page occurs based on schedule information stored in the memory 230 or event display setting information set in advance.

The processor 220 may execute a graphic user interface program 231 stored in the memory 230 to provide a user interface on a display 250 using graphics. For example, the processor 220 may control the display 250 to display one or more event pages provided from the server 206 via the communication interface 260.

The memory 230 stores an instruction or data received from one or more elements (e.g., the processor 220, the input interface 240, the display 250, the communication interface 260, and the camera module 270) included in the electronic device 200, or generated by one or more elements.

The memory 230 stores one or more programs for a service of the electronic device 200. For example, the memory 230 may include one or more of a Graphical User Interface (GUI) program 231, the event page configuration program 232, and the page call program 233.

The GUI program 231 may include at least one software element for providing a user interface on the display 250 using graphics. For example, the GUI program 231 may control the display 250 to display one or more event pages provided from the server 206 via the communication interface 260 under control of the processor 220.

The event page configuration program 232 may generate one or more event pages including one or more user data. The event page configuration program 232 may control the communication interface 260 to transmit information for one or more event pages to the server 206.

The page call program 233 may restore one or more event pages among event pages transmitted to the server 206.

The input interface 240 transmits an instruction or data generated by a user selection to the processor 220 or the memory 230 via the bus 210. For example, the input interface 240 may include at least one of a keypad including at least one hardware button, and a touch panel detecting touch information.

The display 250 displays an image, video, or data to a user. For example, the display 250 may display one or more event pages provided from the server 206 via the communication interface 260 under control of the processor 220.

The communication interface 260 connects communication between at least one different electronic device 202 or 204 or the server or at least one peripheral device and the electronic device 200. For example, the communication interface 260 may support a short distance communication protocol (e.g., wireless fidelity (Wi-Fi), Bluetooth, near field communication (NFC)), or a network communication protocol (e.g., the Internet, a local area network (LAN), a wide area network (WAN), a telecommunication network, a cellular network, a satellite network, or a plain old telephone service (POTS)), or a wired communication protocol (e.g., a universal serial bus (USB), a high definition multimedia interface (HDMI), and the like). At this point, the communication protocol (e.g., short distance communication protocol, a network communication protocol, a wired communication protocol) may be supported by a middleware of the memory 230 or an application programming interface (API). Here, the different electronic device 202 or 204 is a peripheral device of the electronic device 200, and may include a same type of device as the electronic device 200 or a different type of device.

The camera module 270 may provide a collected image obtained via shooting for an object to the processor 220. For example, the camera module 270 may include a camera sensor for converting an optical signal to an electric signal, and an image signal processor (ISP) for converting an analog image signal to a digital image signal. Here, the camera module 270 may include at least one camera module connected to the electronic device 200.

In the above embodiment of the present disclosure, the processor 220 may execute software elements stored in the memory 230 inside one module to generate one or more event pages and transmit the one or more event pages to the server 206, and restore an event page transmitted to the server 206 in response to a characteristic of a display event.

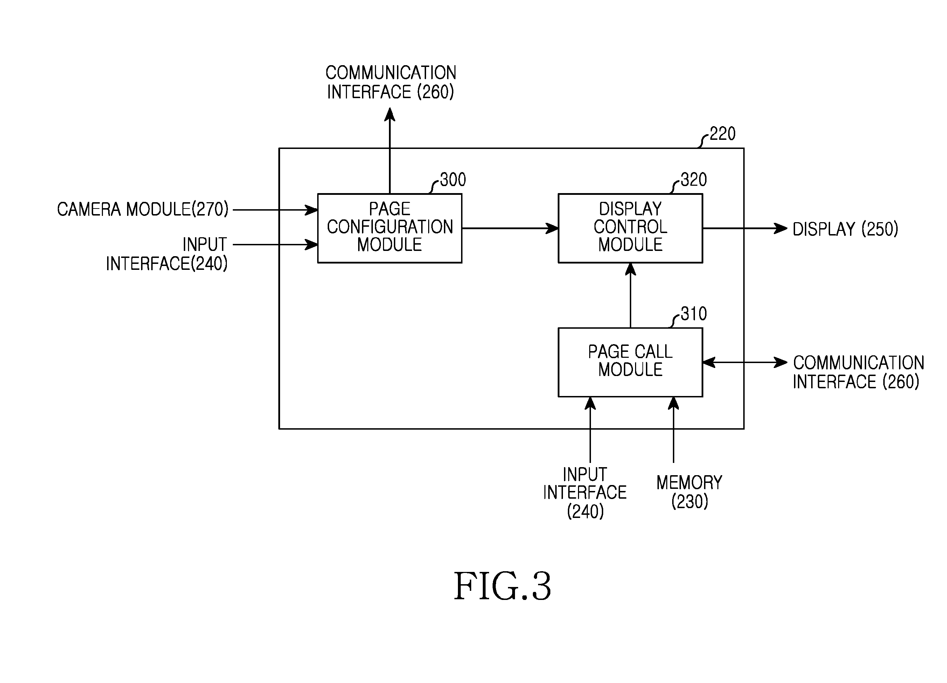

In another embodiment of the present disclosure, as illustrated in FIG. 3, the processor 220 may be configured to generate one or more event pages to transmit the one or more event pages to the server 206, and include an element for restoring an event page transmitted to the server 206 in response to a characteristic of a display event as separate modules.

FIG. 3 is a block diagram illustrating a processor according to an embodiment of the present disclosure.

Referring to FIG. 3, the processor 220 may include a page configuration module 300, a page call module 310, and a display control module 320.

The page configuration module 300 may control to generate one or more event pages including one or more user data and transmit the one or more event pages to the server 206. For example, the page configuration module 300 may execute an event page configuration program 232 stored in the memory 230 to generate one or more event pages including one or more user data and transmit the one or more event pages to the server 206. For example, the page configuration module 300 may control the communication interface 260 to transmit one or more event pages to the server 206 based on a user input information detected via the input interface 240.

The page call module 310 may restore one or more event pages among event pages transmitted to the server 206. For example, the page call module 310 may execute the page call program 233 stored in the memory 230 to restore one or more event pages among event pages transmitted to the server 206. For example, when detecting occurrence of a display event for an event page, the page call module 310 may request the server 206 to transmit one or more event page information corresponding to the display event and restore configuration information of the relevant event page and one or more user data included in the event page. For another example, when detecting occurrence of a display event for an event page, the page call module 310 may request the server 206 to transmit one or more event page information corresponding to the display event and restore configuration information of the relevant event page. When detecting selection of user data included in a restored event page via the input interface 240, the page call module 310 may request the server 206 to transmit user data whose selection has been detected via the communication interface 260 to receive user data of a streaming type.

The display control module 320 controls to provide a user interface to the display 250 using graphics. For example, the display control module 320 may execute a GUI program 331 stored in the memory 230 to control to provide a user interface to the display 250 using graphics. For example, the display control module 320 may control to display one or more event pages provided from the server 206 via the communication interface 260 on the display 250 under control of the page call module 310.

In the above embodiment of the present disclosure, the electronic device 200 may generate one or more event pages using the processor 220 to transmit the one or more event pages to the server 206, and restore an event page transmitted to the server 206 in response to a characteristic of a display event.

In another embodiment of the present disclosure, the electronic device 200 may include a separate control module for generating one or more event pages to transmit the one or more event pages to the server 206, and restoring an event page transmitted to the server 206 in response to a characteristic of a display event.

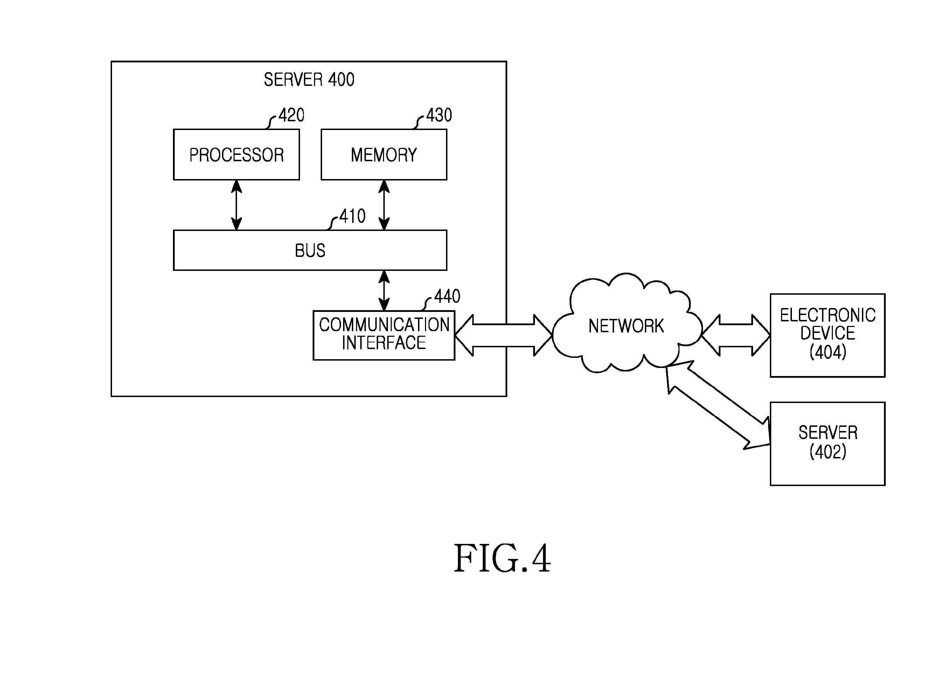

FIG. 4 is a block diagram illustrating a server according to an embodiment of the present disclosure.

Referring to FIG. 4, a server 400 includes a bus 410, a processor 420, a memory 430, and a communication interface 440.

The bus 410 connects elements included in the server 400 with each other, and controls communication between the elements included in the server 400.

The processor 420 controls driving of the server 400. For example, the processor 220 may decipher an instruction received from one or more other elements (e.g., the memory 430 and the communication interface 440) included in the server 400 via the bus 410, and execute an operation or a data process corresponding to the deciphered instruction.

The processor 420 controls to store one or more event page information provided from the electronic device 404 via the communication interface 440 in the memory 430.

When receiving a page request signal of the electronic device 404 via the communication interface 440, the processor 420 controls to retrieve one or more event pages corresponding to the page request signal from the memory 430 and transmit the one or more event pages to the electronic device 404. For example, when receiving a page request signal of the electronic device 404 via the communication interface 440, the processor 420 may control to transmit configuration information of one or more event pages corresponding to the page request signal and one or more user data included in one or more event pages to the electronic device 404. For another example, when receiving a page request signal of the electronic device 404 via the communication interface 440, the processor 420 may control to transmit configuration information of one or more event pages corresponding to the page request signal to the electronic device 404. Thereafter, when receiving a user data request signal of the electronic device 404 via the communication interface 440, the processor 420 may control to transmit one or more user data corresponding to the user data request signal to the electronic device 404 based on a streaming method.

The memory 430 stores an instruction or data received from one or more elements (the processor 420 and the communication interface 440) included in the server 400 or generated by one or more elements. For example, the memory 430 may store configuration information of an event page and user data included in the event page provided from the electronic device 404 via the communication interface 440. For example, the memory 430 may discriminate configuration information of an event page and user data included in the event page provided from the electronic device 404 and store the configuration data.

The communication interface 440 connects communication between at least one different server 402 or at least one electronic device 404 and the server 400. For example, the communication interface 440 may support a short distance communication protocol (e.g., Wi-Fi, Bluetooth, NFC), or a network communication protocol (e.g., the Internet, a LAN, a WAN, a telecommunication network, a cellular network, a satellite network, or a POTS), or a wired communication protocol (e.g., a USB, an HDMI, and the like). At this point, the communication protocol (e.g., short distance communication protocol, a network communication protocol, and a wired communication protocol) may be supported by a middleware of the memory 430 or an application programming interface (API).

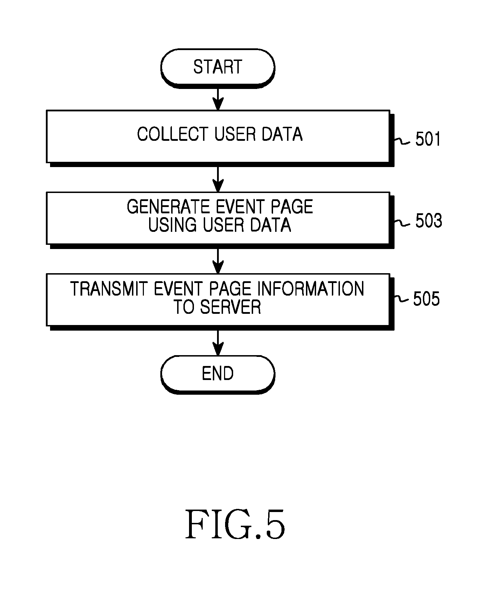

FIG. 5 is a flowchart illustrating a procedure for transmitting an event page in an electronic device according to an embodiment of the present disclosure.

Referring to FIG. 5, the electronic device collects user data in operation 501. For example, the electronic device 200 may collect user data, such as a photo, a moving picture, a sound, position information, and the like, using one or more sensor modules. For example, the electronic device 200 may collect a photo or a moving picture via the camera module 270.

Thereafter, the electronic device generates one or more event pages using the collected user data in operation 503. For example, the electronic device 200 may generate one or more event pages including one or more user data based on a characteristic of a generation event for an event page.

When generating an event page, the electronic device transmits information for an event page to the server in operation 505. For example, the electronic device 200 may transmit configuration information of one or more event pages and user data included in an event page to the server 206. In this case, the electronic device 200 may delete or maintain user data included in an event page stored in the memory 230. For another example, the electronic device 200 may transmit configuration information of one or more event pages to the server 206. In this case, the electronic device 200 may maintain user data included in an event page stored in the memory 230. Here, the configuration information of the event page may include one or more user data information included in the event page and arrangement information of one or more user data.

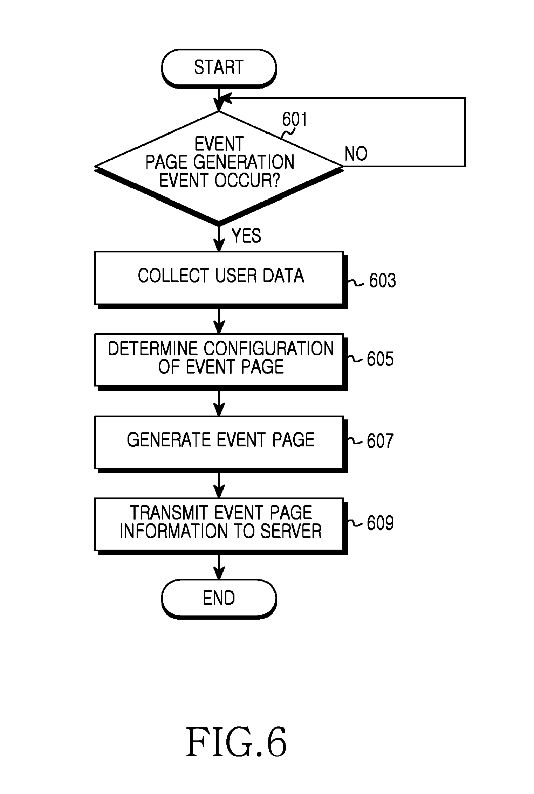

FIG. 6 is a flowchart illustrating a procedure for generating an event page in an electronic device according to an embodiment of the present disclosure.

Referring to FIG. 6, the electronic device determines whether a generation event for an event page occurs in operation 601. For example, the electronic device 200 may determine whether a generation event for an event page occurs based on input information detected via the input interface 240. For another example, the electronic device 200 may determine whether a generation event for an event page occurs based on schedule information stored in the memory 230.

If it is determined in operation 601 that a generation event for an event page does not occur, the electronic device may determine whether a generation event for an event page occurs again in operation 601.

If it is determined in operation 601 that a generation event for an event page does occur, the electronic device collects user data in operation 603. For example, the electronic device may collect a photo or a moving picture via the camera module 270. For another example, the electronic device 200 may collect a sound via a microphone. For still another example, the electronic device 200 may collect position information of the electronic device 200 via a position estimation module.

The electronic device determines configuration of an event page in operation 605. For example, the electronic device may display configuration of one or more event pages that may configure an event page on the display 250. Thereafter, the electronic device 200 may determine configuration of one or more event pages selected by input information detected via the input interface 240 among configurations of one or more event pages displayed on the display 250. For another example, the electronic device 200 may determine configuration of an event page set in advance. Here, the configuration of the event page may include arrangement of user data included in the event page and information for a structure of the event page, such as a size of arranged user data.

The electronic device may arrange user data so that it may correspond to configuration of an event page to generate one or more event pages in operation 607. For example, the electronic device may generate an event page so that it may include log information for a characteristic of a generation event for an event page. For example, when detecting occurrence of a generation event for generating an event page for a family travel in operation 601, the electronic device 200 may generate an event page so that it may include log information for the family travel.

The electronic device transmits information for an event page to the server in operation 609. For example, the electronic device may transmit configuration information of one or more event pages and user data included in the event page to the server.

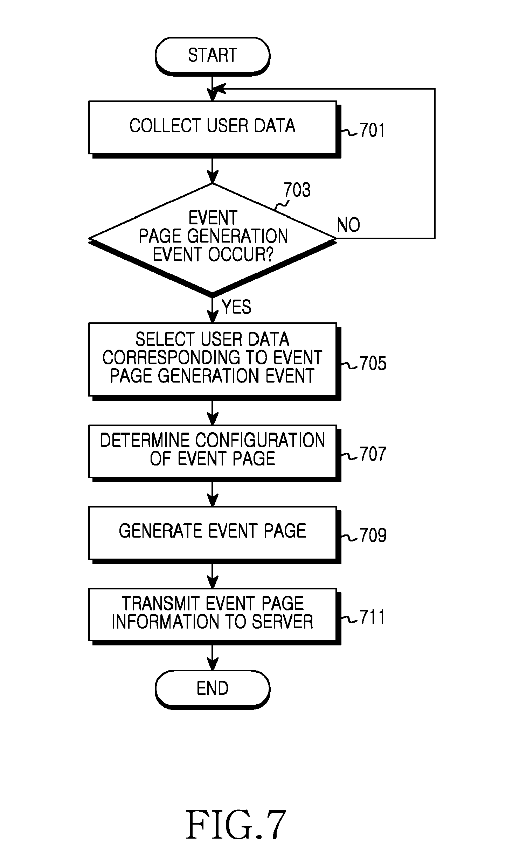

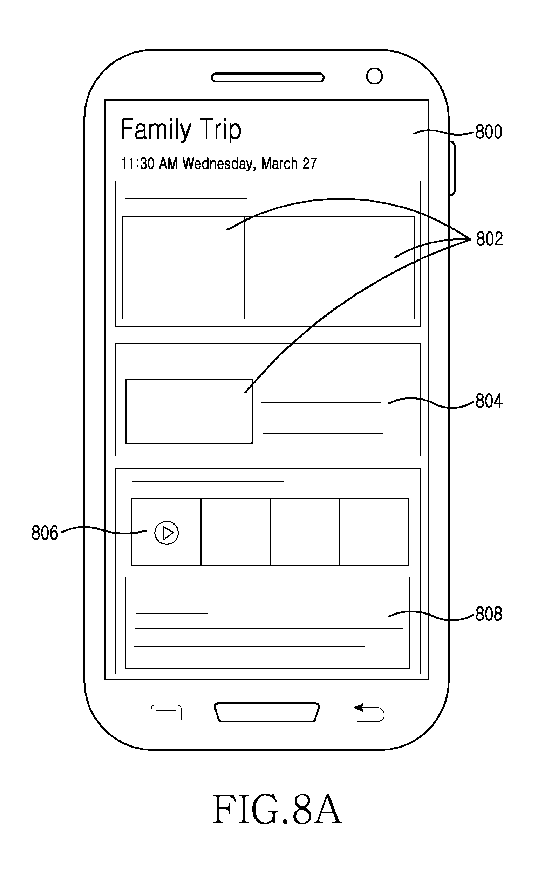

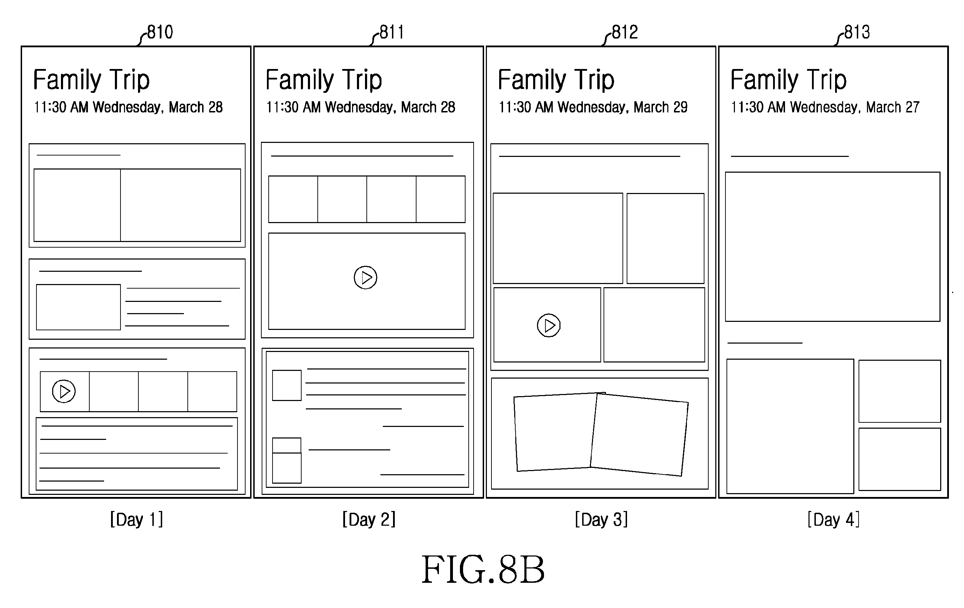

FIG. 7 is a flowchart illustrating a procedure for generating an event page in an electronic device according to an embodiment of the present disclosure. Hereinafter, a characteristic of generating an event page with reference to configuration of an event page illustrated in FIGS. 8A and 8B is described.

Referring to FIG. 7, the electronic device collects user data in operation 701. For example, the electronic device 200 may collect user data, such as a photo, a moving picture, a sound, position information, and the like, using one or more sensor modules.

The electronic device determines whether a generation event for an event page occurs in operation 703. For example, the electronic device 200 may determine whether a generation event for an event page occurs based on input information detected via the input interface 240. For another example, the electronic device 200 may determine whether a generation event for an event page occurs based on schedule information stored in the memory 230.

If it is determined in operation 703 that a generation event for an event page does not occur, the electronic device may collect user information again in operation 701.

If it is determined in operation 703 that a generation event for an event page does occur, the electronic device may select user data corresponding to a generation event for the event page in operation 705. For example, when detecting occurrence of a generation event for generating an event page for a family travel, the electronic device 200 may extract one or more user data related to the family travel among user data stored in the memory 230. For example, the electronic device may extract one or more user data related to a family travel based on a travel period and a travel place, or extract one or more user data related to a family travel based on a user selection.

The electronic device determines configuration of an event page in operation 707. For example, the electronic device 200 may select configuration of one or more event pages among configurations of a plurality of event pages that configure an event page. For another example, the electronic device 200 may determine configuration of an event page set in advance.

The electronic device arranges user data so that it may correspond to configuration of an event page to generate one or more event pages in operation 709.

FIGS. 8A and 8B illustrate configurations of an event page according to an embodiment of the present disclosure.

Referring to FIG. 8A, the electronic device 200 may generate an event page 800 including at least one of a photo 802, text 804, a moving picture 806, and link information 808 corresponding to a family travel as illustrated in FIG. 8A.

Referring to FIG. 8B, the electronic device 200 may generate a plurality of event pages 810 to 813 including at least one of a photo, text, a moving picture, and link information corresponding to a family travel as illustrated in FIG. 8B. Here, the plurality of event pages 810 to 813 may include one or more event pages provided from another electronic device. The link information may include one or more of an address, social network service related information, and a push message.

The electronic device transmits information for an event page to the server in operation 711. For example, the electronic device may transmit configuration information of one or more event pages and user data included in an event page to the server.

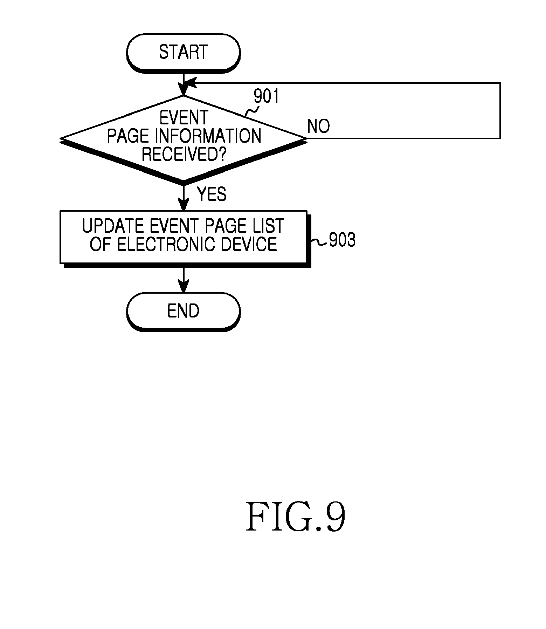

FIG. 9 is a flowchart illustrating a procedure for storing an event page in a server according to an embodiment of the present disclosure.

Referring to FIG. 9, the server determines whether event page information is received from an electronic device in operation 901.

If it is determined in operation 901 that the event page information is not received from the electronic device, the server may determine whether the event page information is received from the electronic device again in operation 901.

If it is determined in operation 901 that the event page information is received from the electronic device, the server updates an event page list of an electronic device in operation 903. For example, the server 400 may determine whether already stored one or more event pages for an electronic device that has transmitted event page information exist. In the case where the already stored one or more event pages exist, the server 400 may update the event page list of the electronic device. Meanwhile, in the case where the already stored one or more event pages do not exist, the server 400 may generate an event page list for an electronic device.

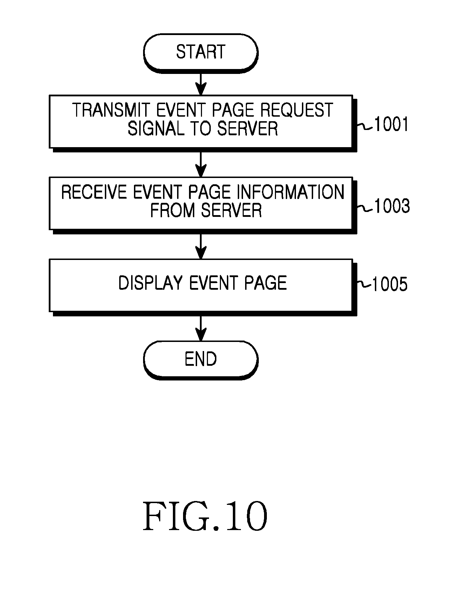

FIG. 10 is a flowchart illustrating a procedure for displaying an event page in an electronic device according to an embodiment of the present disclosure.

Referring to FIG. 10, the electronic device transmits an event page request signal to a server in operation 1001. For example, when detecting display event occurrence for an event page, the electronic device 200 may transmit a request signal of an event page for displaying to the display 250 in response to a display event to the server 206.

The electronic device receives event page information from the server in operation 1003.

The electronic device displays an event page provided from the server to the display 250 in operation 1005.

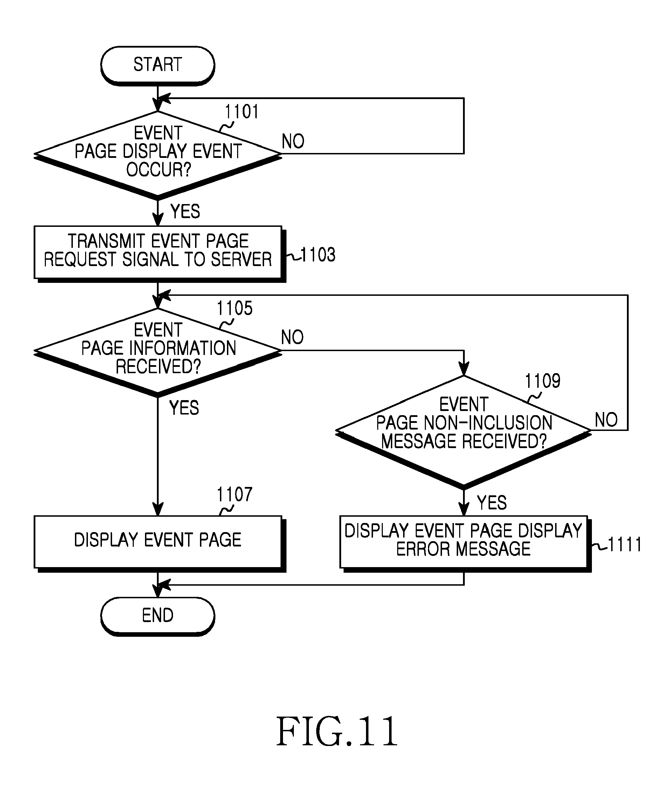

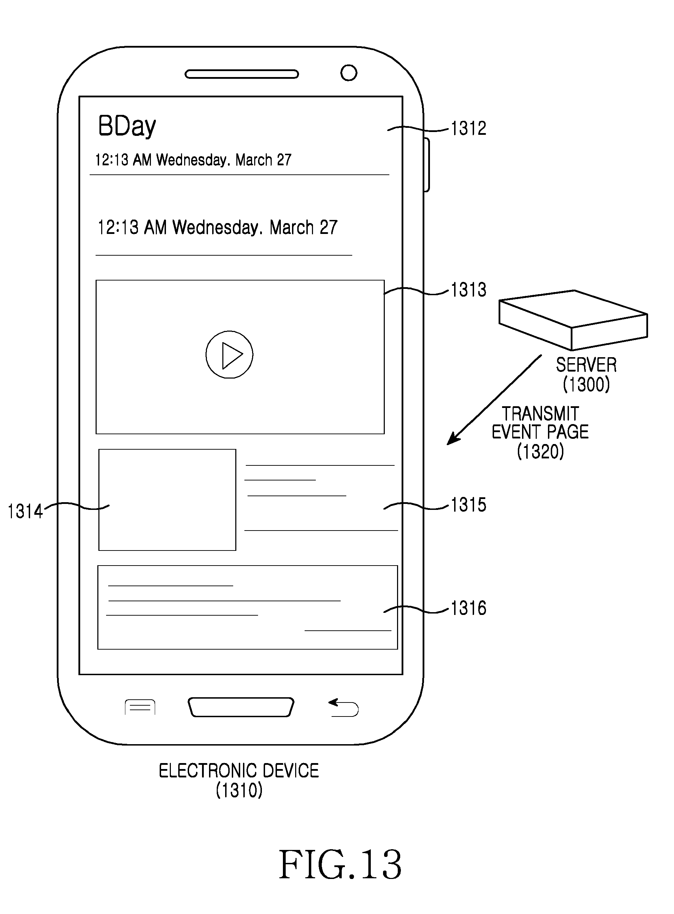

FIG. 11 is a flowchart illustrating a procedure for receiving an event page from a server in an electronic device according to an embodiment of the present disclosure. FIG. 13 illustrates a configuration for transmitting an event page in a server according to an embodiment of the present disclosure. Hereinafter, a characteristic of receiving an event page is described with reference to configuration illustrated in FIG. 13.

Referring to FIG. 11, the electronic device determines whether a display event for an event page occurs in operation 1101. For example, the electronic device 200 may determine whether a display event for an event page occurs based on one or more of schedule information, event display setting information, and log information stored in the memory 230. For example, when detecting schedule information for a wife's birthday, the electronic device 200 may analyze a user log information to determine whether generation information of an event page related to the wife's birthday exists. In the case where the generation information of the event page related to the wife's birthday exists, the electronic device may detect a display event for the event page related to the wife's birthday occurs.

If it is determined in operation 1101 that display event for an event page does not occur, the electronic device may determine whether a display event for an event page occurs again in operation 1101.

If it is determined in operation 1101 that the display event for the event page does occur, the electronic device transmits an event page request signal to a server in operation 1103.

The electronic device determines event page information is received from the server as a response to the request signal in operation 1105.

If it is determined in operation 1105 that event page information is received from the server, the electronic device displays an event page provided from the server to the display 250 in operation 1107.

Referring to FIG. 13, when the electronic device 1310 may display an event page 1312 including at least one of a moving picture 1313, a photo 1314, text 1315, and link information 1316 related to the wife's birthday provided from the server 1300 to the display 250.

If it is determined in operation 1105 that the event page information is not received from the server, the electronic device determines whether an event page non-inclusion message is received from the server in operation 1109.

If it is determined in operation 1109 that the event page non-inclusion message is not received from the server, the electronic device may constantly determine whether event page information is received from the server in operation 1105. When not receiving event page information or an event page non-inclusion message within an effective time after transmitting an event page request signal, the electronic device may transmit an event page request signal to the server again.

If it is determined in operation 1109 that the event page non-inclusion message is received from the server, the electronic device may display an event page display error message to the display 250 in operation 1111.

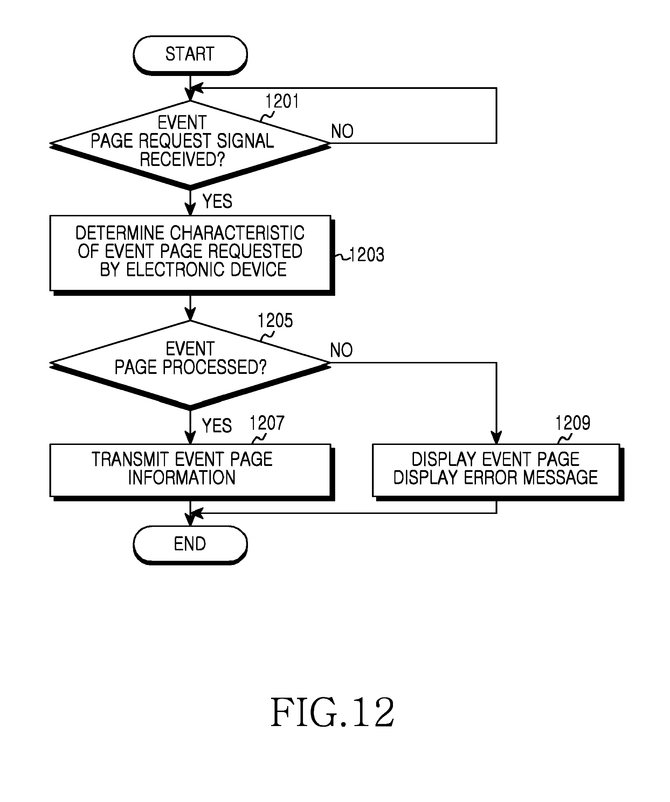

FIG. 12 is a flowchart illustrating a procedure for transmitting an event page to an electronic device in a server according to an embodiment of the present disclosure. Hereinafter, a characteristic of transmitting an event page is described with reference to configuration illustrated in FIG. 13.

Referring to FIG. 12, the server determines whether an event page request signal is received from an electronic device in operation 1201.

If it is determined in operation 1201 that the event page request signal is not received, the server may determine whether the event page request signal is received from the electronic device in operation 1201 again.

If it is determined in operation 1201 that the event page request signal is received, the server determines a characteristic of an event page requested by the electronic device in operation 1203.

The server determines whether it processes an event page requested by the electronic device based on the characteristic of the event page requested by the electronic device in operation 1205.

If it is determined in operation 1205 that the event page requested by the electronic device is processed, the server transmits information for an event page corresponding to an event page request of the electronic device to the electronic device in operation 1207. For example, in the case where the electronic device 1310 requests an event page related to a wife's birthday as in FIG. 13, the server 1300 may transmit (1320) information for an event page 1312 related to the wife's birthday corresponding to the event page request of the electronic device 1310 to the electronic device 1310. For example, the server 1300 may transmit configuration information of the event page corresponding to the event page request of the electronic device 1310 and one or more user data included in the event page to the electronic device 1310.

If it is determined in operation 1205 that the event page requested by the electronic device is not processed, the server may transmit an event page non-inclusion message to the electronic device in operation 1209.

In the above embodiment of the present disclosure, the server may transmit configuration information of the event page corresponding to the event page request of the electronic device and one or more user data included in the event page to the electronic device.

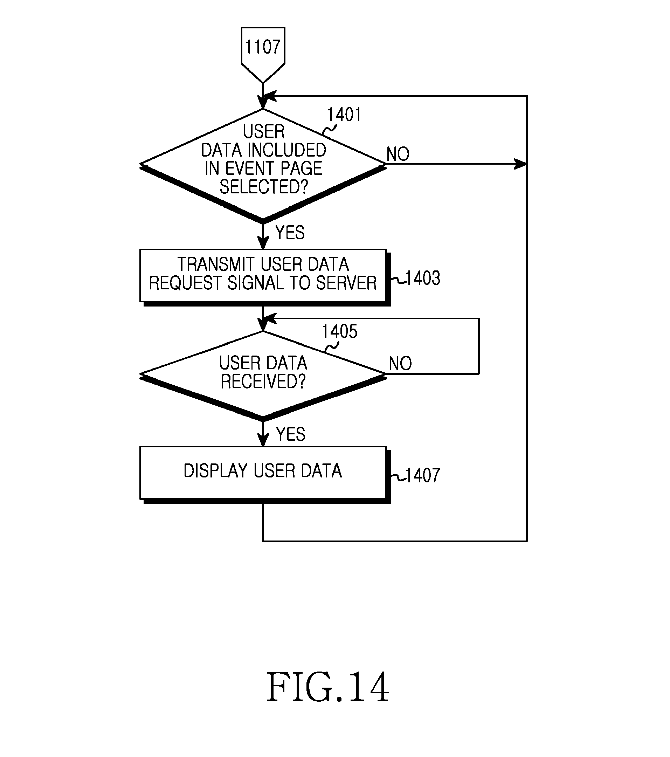

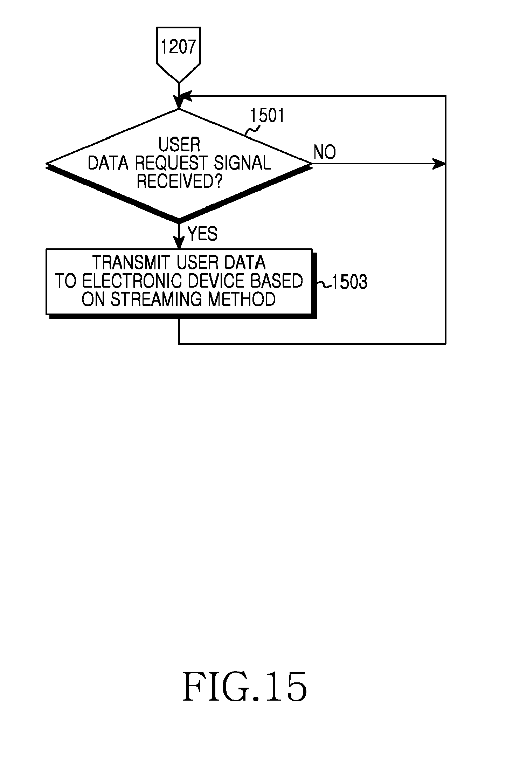

In another embodiment of the present disclosure, the server may separate configuration information of the event page corresponding to the event page request of the electronic device and one or more user data included in the event page and transmit the separated configuration information to the electronic device as in FIGS. 14 and 15.

FIG. 14 is a flowchart illustrating a procedure for receiving user data forming an event page in an electronic device according to an embodiment of the present disclosure.

Referring to FIG. 14, the electronic device may display an event page on the display 250 based on configuration information of an event page provided from a server in operation 1107 of FIG. 11

The electronic device determines whether selection for user data included in an event page is detected in operation 1401. For example, the electronic device 200 may determine whether a touch input for one or more user data is detected from an event page displayed on the display 250.

If it is determined in operation 1401 that user data included in the event page is not selected, the electronic device may constantly determine whether selection for user data included in the event page is detected in operation 1401.

If it is determined in operation 1401 that user data included in the event page is selected, the electronic device transmits a request signal for the selected user data to a server in operation 1403.

The electronic device determines whether user data is received from the server as a response to the request signal in operation 1405.

If it is determined in operation 1405 that user data is not received from the server, the electronic device may constantly determine whether user data is received from the server as a response to the request signal. When not receiving user data within an effective time after transmitting a request signal for user data, the electronic device may transmit the request signal for the user data to the server again.

If it is determined in operation 1405 that user data is received from the server, the electronic device displays the user data received from the server on the display 250 in operation 1407. For example, the electronic device may display the user data received from the server on the display 250 based on a streaming method.

In the above embodiment of the present disclosure, when detecting selection of user data included in an event page, the electronic device may request the server to transmit the relevant user data and receive the relevant user data to restore the relevant user data.

In another embodiment of the present disclosure, when detecting selection of user data included in an event page, the electronic device may determine whether to store the relevant user data in the memory 230. In the case where the relevant user data is stored in the memory 230, the electronic device may extract the relevant user data stored in the memory 230 and display the relevant user data on the display 250.

FIG. 15 is a flowchart illustrating a procedure for transmitting user data to an electronic device in a server according to an embodiment of the present disclosure.

Referring to FIG. 15, when transmitting information for an event page corresponding to an event page request of the electronic device to the electronic device, the server determines whether a request signal for user data is received from the electronic device in operation 1501.

If it is determined in operation 1501 that a request signal for user data is not received, the server may constantly determine whether a request signal for user data is received in operation 1501.

If it is determined in operation 1501 that the request signal for the user data is received in operation 1501, the server transmits one or more user data corresponding to the request signal for the user data to the electronic device based on a streaming method.

In the above embodiment of the present disclosure, the server may transmit event page information to the electronic device as a response to a request of the electronic device.

In another embodiment of the present disclosure, when detecting display event occurrence based on setting information for a display event set in advance, the server may transmit information for one or more event pages corresponding to the display event to the electronic device. For example, when detecting display event occurrence for an event page of an electronic device, the server may transmit display event occurrence information to the relevant electronic device. When receiving a display information request signal from an electronic device as a response to the display event occurrence information, the server may transmit information for one or more event pages corresponding to the display event to the electronic device.

As described above, an electronic device configures an event page including one or more user data and stores the event page using a server, and restores an event page stored in the server based on an event occurrence condition, so that utility of data stored in the server may be raised and a user convenience using an event page may be provided.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a ROM, a RAM, CD-ROMs, magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for operating an electronic device, the method comprising:
generating an event page comprising data;
transmitting information for the event page to a server;
transmitting a request signal for at least one event page corresponding to a display event to the server as a response to occurrence of the display event; and
displaying an event page received from the server.

2. The method of claim 1, wherein the generating of the event page comprises generating the event page that comprises log information corresponding to data included in the event page.

3. The method of claim 1, wherein the transmitting of the information for the event page to the server comprises transmitting at least one of configuration information of the event page and configuration information of the event page and at least one user data included in the event page to the server.

4. The method of claim 1, wherein the transmitting of the request signal comprises:
determining whether the display event occurs based on at least one of display event setting information set in advance, schedule information, and log information for event page generation; and
when detecting occurrence of the display event, transmitting a request signal for at least one event page corresponding to the display event to the server.

5. The method of claim 1, further comprising:
after displaying the event page, when detecting selection of at least one data included in the event page, transmitting a request signal for the selected at least one data to the server; and
displaying at least one data received from the server to a display.

6. The method of claim 1, further comprising:
after displaying the event page, when detecting selection of at least one data included in the event page, extracting the selected at least one data from a memory and displaying the selected at least one data on a display.

7. An electronic device comprising:
a communication interface;
a display; and
a processor configured:
to generate an event page comprising data,
to transmit information for the event page to a server based on the communication interface,
to transmit a request signal for at least one event page corresponding to a display event to the server based on the communication interface as a response to occurrence of the display event, and
to display an event page received from the server on the display.

8. The electronic device of claim 7, wherein the processor comprises:
a page generation module configured:
to generate an event page comprising at least one data, and
to transmit the information for the event page to the server based on the communication interface;
a page call module configured, when detecting occurrence of the display event:
to transmit a request signal for at least one event page corresponding to the display event to the server based on the communication interface, and
to receive an event page from the server; and
a display control module processor configured to display the event page provided by the page call module from the server to the display.

9. The method of claim 1 or the electronic device of claim 7, wherein the data comprises at least one of a photo, text, a moving picture, a sound, link information, and position information.

10. The electronic device of claim 7, wherein the processor is further configured to generate the event page that comprises log information corresponding to data included in the event page.

11. The electronic device of claim 7, wherein the communication interface is configured to transmit at least one of configuration information of the event page and configuration information of the event page and at least one user data included in the event page to the server.

12. The electronic device of claim 7, wherein the processor is further configured to determine whether the display event occurs based on at least one of display event setting information set in advance, schedule information, and log information for event page generation.

13. The electronic device of claim 7, wherein the display is further configured to display at least one event page corresponding to the display event based on configuration information of an event page provided from the server.

14. The electronic device of claim 7, further comprising:
an input interface,
wherein, when detecting selection of at least one data included in the event page displayed on the display based on the input interface, the processor is further configured:
to transmit a request signal for the selected at least one data to the server based on the communication interface, and
to display at least one data received from the server based on the communication interface to the display.

15. The electronic device of claim 7, further comprising:
an input interface; and
a memory,
wherein, when detecting selection of at least one data included in the event page, the processor is further configured:
to extract the selected at least one data from the memory, and
to display the selected at least one data on the display.
